# EUROPÄISCHE PATENTSCHRIFT

(11) **EP 2 768 195 B1**
(45) Veröffentlichungstag und Bekanntmachung des Hinweises auf die Patenterteilung: **30.11.2016**
(21) Anmeldenummer: 14001747.6
(22) Anmeldetag: 25.02.2009
(51) Int. Cl.: H04B 10/114, H04B 10/116, H04L 27/02

(54) **VERFAHREN ZUR FLACKERFREIEN ÜBERTRAGUNG DIGITALER DATEN IN EINEM OPTISCHEN FREIRAUM-ÜBERTRAGUNGSSYSTEM**
METHOD FOR FLICKER-FREE TRANSMISSION OF DIGITAL DATA IN A FREE-SPACE OPTICAL TRANSMISSION SYSTEM
PROCÉDÉ DE TRANSMISSION DE DONNÉES NUMÉRIQUES SANS SCINTILLEMENT DANS UN SYSTÈME DE TRANSMISSION OPTIQUE À ESPACE LIBRE

(30) Priorität: 29.02.2008 DE 102008011823
(43) Veröffentlichungstag der Anmeldung: 20.08.2014
(62) Teilanmeldung aus: 09714623.7
(73) Patentinhaber: Siemens Aktiengesellschaft, 80333 München (DE)
(72) Erfinder: Walewski, Joachim, 82008 Unterhaching (DE)

(56) Entgegenhaltungen:
- WO-A-95/11558
- US-A- 5 706 115
- US-A1- 2007 058 987

## Beschreibung

Die Erfindung liegt auf dem Gebiet der Nachrichtentechnik und betrifft Verfahren zur Übertragung digitaler Daten in einem optischen Freiraum-Übertragungssystem gemäß den Oberbegriffen der unabhängigen Patentansprüche.

Vor dem Hintergrund eines stetig wachsenden Datenaufkommens werden zunehmend optische Übertragungssysteme eingesetzt, da diese im Vergleich zur Bandbreite elektrischer Kabel sehr hohe Datenraten ermöglichen. In optischen Übertragungssystemen werden mit den zu übertragenden Daten modulierte Lichtwellen erzeugt, in einen in der Regel aus Glas oder Polymeren bestehenden Lichtwellenleiter eingekoppelt und zum Empfänger übertragen. In der Praxis mangelt es drahtgebundenen optischen Übertragungssystemen oftmals an einer wünschenswerten Flexibilität.

In jüngster Zeit werden zunehmend drahtlose optische Übertragungssysteme, die gemeinhin als "optische Freiraum-Übertragungssysteme" bezeichnet werden, für praktische Anwendungen in Betracht gezogen. In optischen Freiraum-Übertragungssystemen werden die modulierten Lichtwellen nicht in einen Lichtwellenleiter eingekoppelt, sondern in den Raum gestrahlt und von einem Photodetektor empfangen.

Für eine optische Übertragung digitaler Daten (Binärdaten) werden diese in zwei Schritten umgesetzt, wobei zunächst mittels eines Kodierverfahrens eine serielle Kodesequenz (kodierte Folge von Binärdaten) erzeugt wird, die den Lichtwellen anschließend mittels eines Modulationsverfahrens (Amplituden-, Frequenz- oder Phasenmodulation) aufmoduliert wird. Eine Kodierung ("Leitungskodierung") der digitalen Daten erfolgt in der Praxis auf zwei Arten, wobei entweder die einzelnen Binärwerte oder aber die Übergänge von Binärwerten als Signalpegel kodiert werden. Im ersten Fall wird beispielsweise eine so genannte NRZ-Kodierung (NRZ = Non-Return-To-Zero-Level) eingesetzt, bei der eine logische "0" mit einem niedrigen Signalpegel und eine logische Eins "1" mit einem hohen Signalpegel kodiert wird. Im zweiten Fall wird beispielsweise die so genannte Manchester-Kodierung eingesetzt, bei der jede Bitperiode in zwei Hälften geteilt wird, wobei eine logische "1" mit einem niedrigen Signalpegel am Anfang und einem hohen Signalpegel am Ende, eine logische Null "0" in entsprechend umgekehrter Weise, dargestellt wird.

Werden NRZ-kodierte Daten in ein amplitudenmoduliertes optisches Signal umgewandelt, so wird eine logische "0" mit einem niedrigen Signalpegel (Licht niedriger bzw. fehlender Intensität) und eine logische "1" mit einem hohen Signalpegel (Licht hoher Intensität) übertragen. Treten in einer NRZkodierten Bitfolge längere Abschnitte (Bit-Blöcke) mit einem jeweils gleichen logischen Wert auf, beispielsweise "1111110000000", worin zwei längere Bit-Blöcke der logischen Werte "1" und "0" enthalten sind, so bleibt die Lichtintensität des optischen Signals während dieser Bit-Blöcke jeweils unverändert. Bei einer optischen Übertragung im sichtbaren Wellenlängenbereich kann dies zur Folge haben, dass ein Beobachter ein Flackern bzw. Flimmern des optischen Signals wahrnimmt, wenn die durch die Bitfolge bestimmte Modulationsfrequenz der Lichtwellen weniger als ca. 70 Hertz beträgt. Dies kann zu einem Unwohlsein beim Beobachter und, wie durch medizinische Untersuchungen gezeigt wurde, sogar zu epileptischen Anfällen führen.

Herkömmliche Verfahren zur Übertragung digitaler Daten in einem optischen Übertragungssystem sind aus den Dokumenten WO 95/11558 A, US 2007/058987 A1 und US 5,706,115 A bekannt. Insbesondere zeigt das Dokument US 2007/058987 A1 ein mit sichtbarem Licht arbeitendes Kommunikationssystem, wobei ein Übertragungsgerät eine Datenmodulationseinheit umfasst, welche 1-bit Informationen einer jeden der Farben RGB zuordnet und diese in 3-bit Multiplex-Modulationsdaten umsetzt. Eine LED überträgt sodann ein Multiplex-Lichtsignal, wobei jede der RGB Einheiten entsprechend den Modulationsdaten betrieben wird.

Demgegenüber besteht die Aufgabe der vorliegenden Erfindung darin, ein Verfahren zur Übertragung digitaler Daten in einem optischen Freiraum-Übertragungssystem zur Verfügung zu stellen, durch das ein Flackern bzw. Flimmern eines im sichtbaren Wellenlängenbereich übertragenen optischen Signals vermieden werden kann.

Diese und weitere Aufgaben werden nach dem Vorschlag der Erfindung durch ein Verfahren und eine Vorrichtung zur Übertragung digitaler Daten in einem optischen Freiraum-Übertragungssystem mit den Merkmalen der unabhängigen Patentansprüche gelöst. Vorteilhafte Ausgestaltungen der Erfindung sind durch die Merkmale der Unteransprüche angegeben.

Gattungsgemäß zeigt die Erfindung ein Verfahren zur Übertragung digitaler Daten in einem optischen Freiraum-Übertragungssystem, bei dem insbesondere sichtbare Lichtwellen mit einer aus den digitalen Daten erzeugten binären Kodesequenz amplituden- bzw. intensitätsmoduliert und anschließend über eine optische Freiraumstrecke zwischen einem Sender und einem Empfänger übertragen werden. Als binäre Kodesequenz wird eine mittels eines Kodierverfahrens kodierte Folge von Binärwerten bezeichnet.

Das erfindungsgemäße Verfahren zeichnet sich in wesentlicher Weise dadurch aus, dass die binäre Kodesequenz in der Weise erzeugt wird, dass eine durch die binäre Kodesequenz bestimmte Modulationsfrequenz der Lichtwellen, das heißt eine Wechselrate der Signalpegel (Lichtintensitäten) der Lichtwellen, wenigstens 70 Hertz, vorzugsweise wenigstens 100 Hertz, beträgt. Die Angabe Hertz entspricht einem Wechsel des Signalpegels pro Sekunde. Die Bitperiode, das heißt, der Zeitraum für die optische Übertragung eines Binärwerts zur Verfügung steht, ist zum Erzielen der gewünschten Modulationsfrequenz in geeigneter Weise zu wählen.

Durch das erfindungsgemäße Verfahren kann in vorteilhafter Weise bei einer Übertragung sichtbarer optischer Signale über ein optisches Freiraum-Übertragungssystem ein Flackern bzw. Flimmern der optischen Signale vermieden werden.

Dabei umfasst das Verfahren die folgenden sukzessiven Schritte:
Zunächst wird eine erste binäre Kodesequenz aus den zu übertragenden digitalen Daten in einem senderseitigen Kodierer mittels eines Non-Return-to-Zero-Kodierverfahrens erzeugt.
Anschließend erfolgt ein Wandeln der ersten binären Kodesequenz in eine zweite binäre Kodesequenz in einem senderseitigen Kodesequenzwandler mittels eines Kodewandlungsverfahrens derart, dass eine durch die zweite binäre Kodesequenz bestimmte Modulationsfrequenz der Lichtwellen wenigstens 70 Hertz, vorzugsweise wenigstens 100 Hertz beträgt. In dem Kodewandlungsverfahren werden erste Binärdatenblöcke (Bit-Blöcke) einer wählbaren (gleichen) Blocklänge durch wählbare zweite Binärdatenblöcke, welche den ersten Binärdatenblöcken eineindeutig zugeordnet sind, ersetzt.

Als Kodewandlungsverfahren wird beispielsweise eine 4B/5B-Kodewandlung (4B/5B = 4 Binary/5 Binary) oder eine 8B/10B-Kodewandlung (8B/10B = 8 Binary/10 Binary) durchgeführt. Bei einer 4B/5B-Kodewandlung wird ein Block von 4 Binärwerten in einen Block von 5 Binärwerten so umgewandelt, dass in jedem 5-Bit-Block maximal zwei aufeinander folgende logische Nullen vorkommen. Hierbei sind 4-Bit-Blöcken mittels einer Zuordnungstabelle jeweils gemäß dieser Vorgabe festgelegte 5-Bit-Blöcke zugeordnet. Bei einer 8B/10B-Kodewandlung wird ein Block von 8 Binärwerten in einen Block von 10 Binärwerten so gewandelt, dass in jedem 10-Bit-Block fünfmal eine logische "0" und fünfmal eine logische "1" vorkommt, wobei mindestens drei Zustandswechsel enthalten sind. Hierbei sind die 10-Bit-Blöcke mittels einer Zuordnungstabelle jeweils den 8-Bit-Blöcken zugeordnet.

Darauf folgend wird die Intensität von Lichtwellen mit der zweiten Kodesequenz in einer modulierbaren Lichtquelle des Senders moduliert. Die senderseitig abgestrahlten Lichtwellen werden im Empfänger zum Rückgewinnen der zweiten Kodesequenz empfangen und demoduliert.

Anschließend erfolgt eine Rückwandlung der zweiten Kodesequenz in die erste Kodesequenz in einem Kodesequenzrückwandler mittels des inversen Kodewandlungsverfahrens, wobei die zweiten Binärdatenblöcke durch die ersten Binärdatenblöcke ersetzt werden.

Dann erfolgt eine Erzeugung der digitalen Daten aus der ersten binären Kodesequenz mittels eines inversen Kodierverfahrens.

Das Verfahren zeichnet sich durch eine besonders einfache technische Realisierung aus.

Die Erfindung betrifft auch eine Vorrichtung, bspw. ein optisches Freiraum-Übertragungssystem, zur Übertragung digitaler Daten in einem optischen Freiraum-Übertragungssystem, wobei die Vorrichtung Mittel, wie bspw. einen Sender mit einer amplitudenmodulierbaren Lichtquelle und einen Empfänger mit einem Photodetektor, umfasst, die derart ausgebildet sind, dass ein wie oben beschriebenes Verfahren durchführbar ist.

Die Erfindung wird nun anhand von Ausführungsbeispielen näher erläutert, wobei Bezug auf die beigefügten Figuren genommen wird.
- Fig. 1: zeigt eine schematische Darstellung eines optischen Freiraum-Übertragungssystems;
- Fig. 2: veranschaulicht eine NRZ-Kodierung und 4B/5B-Wandlung einer beispielhaften Binärdatenfolge gemäß einem ersten Ausführungsbeispiel der Erfindung.

Es folgt nun die Beschreibung eines ersten Ausführungsbeispiels:

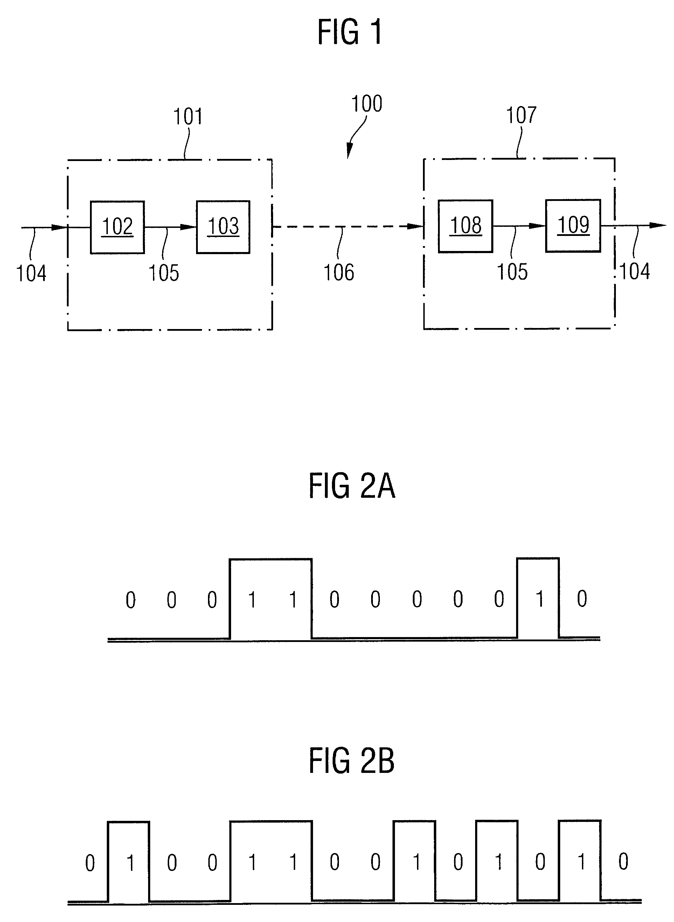

In Figur 1 ist ein insgesamt mit der Bezugszahl 100 bezeichnetes optisches Freiraum-Übertragungssystem schematisch dargestellt. Das optische Freiraum-Übertragungssystem 100 umfasst einen Sender 101 mit einer amplitudenmodulierbaren Lichtquelle (beispielsweise eine Laserdiode) 103 und einen Empfänger 107 mit einem Photodetektor (beispielsweise eine Photodiode) 108.

Der Lichtquelle 103 ist ein kombinierter Kodierer/Wandler 102 vorgeschaltet, dem digitale Daten (Binärdaten) 104 an einem nicht näher dargestellten Signaleingang zugeführt werden.

Die Binärdaten 104 werden im Kodierer/Wandler 102 in einem ersten Schritt einer NRZ-Kodierung unterzogen, was zur Erzeugung einer in Form einer seriellen Folge kodierter Binärdaten vorliegenden ersten seriellen Kodesequenz (A) führt, auf die anschließend in einem zweiten Schritt eine 4B/5B-Wandlung angewendet wird, welche zur Erzeugung einer zweiten seriellen Kodesequenz (B) 105 führt.

Die erzeugte zweite serielle Kodesequenz 105 wird einem in der amplitudenmodulierbaren Lichtquelle generierten Lichtstrahl 106 mit einer Wellenlänge von beispielsweise 633 nm aufmoduliert, der durch den freien Raum in Richtung Empfänger 107 abgestrahlt wird. Im Photodetektor 108 des Empfängers 107 wird der Lichtstrahl empfangen und demoduliert, wodurch die zweite serielle Kodesequenz B 105 zurückgewonnen wird.

Dem Photodetektor 108 ist ein kombinierter Dekodierer/Rückwandler 109 nachgeschaltet, dem die zurückgewonnene zweite Kodesequenz (B) 105 in einem nicht näher dargestellten Signaleingang zugeführt wird. Im Dekodierer/Rückwandler 109 wird die zweite Kodesequenz (B) 105 in die erste Kodesequenz (A) rückgewandelt, indem eine inverse 4B/5B-Wandlung durchgeführt wird. Anschließend werden die zu übertragenden Binärdaten 104 aus der ersten Kodesequenz (A) durch Anwenden des inversen NRZ-Kodierverfahrens zurückgewonnen, welche an einem nicht näher bezeichneten Signalausgang des Dekodierer/Rückwandlers 109 bereitgestellt werden.

In Fig. 2 ist die im Kodierer/Wandler 102 durchgeführte Kodierung/Wandlung der Binärdaten 104 anhand einer beispielhaften Bitfolge "000110000010" näher erläutert. Die obere Abbildung veranschaulicht die NRZ-Kodierung dieser Bitfolge, wobei zur Erzeugung der binären Kodesequenz (A) jede logische "0" mit einem niedrigen Signalpegel und jede logische "1" mit einem hohen Signalpegel kodiert wird. Dies hat zur Folge, dass in der binären Kodesequenz (A) längere Abschnitte mit einem jeweils gleichen Signalpegel auftreten - hier beispielsweise eine Abfolge von fünf niedrigen Signalpegeln.

Die NRZ-kodierte binäre Kodesequenz (A) wird anschließend einer 4B/5B-Wandlung unterzogen, welche zur Erzeugung der zweiten seriellen Kodesequenz (B) führt. Für die Anwendung der 4B/5B-Wandlung wird die binäre Kodesequenz (A) sequenziell in 4-Bit-Blöcke (Binärwörter) mit jeweils 4 folgenden Binärwerten unterteilt. Die enthaltenen 4-Bit-Blöcke werden durch 5-Bit-Blöcke ersetzt, welche gemäß der folgenden eineindeutigen Zuordnungstabelle den 4-Bit-Blöcken zugeordnet sind.

| 4-Bit-Block | 5 Bit-Block |
|---|---|
| 0000 | 11110 |
| 0001 | 01001 |
| 0010 | 10100 |
| 0011 | 10101 |
| 0100 | 01010 |
| 0101 | 01011 |
| 0110 | 01110 |
| 0111 | 01111 |
| 1000 | 10010 |
| 1001 | 10011 |
| 1010 | 10110 |
| 1011 | 10111 |
| 1100 | 11010 |
| 1101 | 11011 |
| 1110 | 11100 |
| 1111 | 11101 |

Für die beispielhafte Bitfolge ist eine 4B/5B-Wandlung der binären Kodesequenz (A) in die binäre Kodesequenz (B) in der unteren Abbildung von Fig. 2 dargestellt. Ersichtlich sind in der binären Kodesequenz (B) keine längeren Abschnitte jeweils gleicher Signalpegel mehr enthalten.

Bei einer entsprechend gewählten Bitperiode führt dies dazu, dass die Modulationsfrequenz für die Intensitätsmodulation des Lichtstrahls 106 größer als 100 Hertz ist, so dass mehr als 100 Intensitätswechsel pro Sekunde auftreten und von einem Beobachter kein Flackern bzw. Flimmern des Lichtstrahls 106 wahrnehmbar ist.

Es folgt nun die Beschreibung eines zweiten Ausführungsbeispiels:

Es sei angenommen, dass die Bitfolge "000110000010" über eine optische Freiraumstrecke eines wie in Fig. 1 veranschaulichten optischen Freiraum-Übertragungssystems übertragen werden soll. Zu diesem Zweck wird die Bitfolge zunächst mittels NRZ-Kodierung in eine binäre Kodesequenz kodiert, wie sie in Fig. 2, obere Abbildung, dargestellt ist.

Die binäre Kodesequenz wird anschließend in drei Bitblöcke à vier Bit unterteilt, so dass sich hieraus die Bitblöcke "0001", "1000", "0010" ergeben.

Jeder Bitblock soll während einer eigenen zeitlichen Schutzperiode übertragen werden, wobei für die Schutzperiode eine Periodendauer von 10 Millisekunden festgelegt wird. Zudem wird festgelegt, dass jede Schutzperiode in zwei Periodenabschnitte à 5 Millisekunden unterteilt wird, wobei ein Bit-block jeweils während des ersten Periodenabschnitts einer Schutzperiode übertragen wird. Für die Schutzperiode wird eine während der Schutzperiode zu übertragende Soll-Lichtmenge (Einheit: Joule bzw. Lumensekunden) festgelegt. Hier wird als Soll-Lichtmenge für die Schutzperiode beispielsweise 1 Lumensekunde festgelegt.

Für jeden Bitblock wird senderseitig die zu übertragende Lichtmenge rechnerisch ermittelt, was in einfacher Weise anhand der eingesetzten Lichtintensitäten und Bitperioden erfolgen kann. Beispielsweise beträgt die übertragene Lichtmenge für die drei Bitblöcke jeweils 0,4 Lumensekunden.

Für die optische Übertragung der binären Kodesequenz wird zunächst der erste Bitblock moduliert und während des ersten Periodenabschnitts der ersten Schutzperiode mit einer Lichtmenge von insgesamt 0,4 Lumensekunden übertragen. Dem folgt ein Aussenden von nicht-modulierten Lichtwellen mit insgesamt 0,6 Lumensekunden während des zweiten Periodenabschnitts der ersten Schutzperiode. Der zweite Bitblock wird in entsprechender Weise übertragen, wobei während des ersten Periodenabschnitts der zweiten Schutzperiode mit dem zweiten Bitblock amplitudenmodulierte Lichtwellen übertragen werden, gefolgt von einer Übertragung von nichtmodulierten Lichtwellen während des zweiten Periodenabschnitts der zweiten Schutzperiode mit einer Lichtintensität, die zur einer übertragenen Lichtmenge von 0,6 Lumensekunden führt. Gleichermaßen wird der dritte Bitblock in entsprechender Weise übertragen, wobei während des ersten Periodenabschnitts der dritten Schutzperiode mit dem dritten Bitblock amplitudenmodulierte Lichtwellen übertragen werden, gefolgt von einer Übertragung von nichtmodulierten Lichtwellen während des zweiten Periodenabschnitts der dritten Schutzperiode mit einer Lichtintensität, die zur einer übertragenen Lichtmenge von 0,6 Lumensekunden führt.

### Bezugszeichenliste

- 100: Freiraum-Übertragungssystem
- 101: Sender
- 102: Kodierer/Wandler
- 103: Lichtquelle
- 104: Binärdaten
- 105: Kodesequenz
- 106: Lichtstrahl
- 107: Empfänger
- 108: Photodetektor
- 109: Dekodierer/Rückwandler

## Patentansprüche

1. Verfahren zur Übertragung digitaler Daten (104) in einem optischen Freiraum-Übertragungssystem (100), bei welchem mit einer aus den digitalen Daten (104) erzeugten binären Kodesequenz (105) amplitudenmodulierte Lichtwellen (106) über eine optische Freiraumstrecke zwischen einem Sender (101) und einem Empfänger (107) übertragen werden, wobei die binäre Kodesequenz (105) so erzeugt wird, dass eine durch die binäre Kodesequenz bestimmte Modulationsfrequenz der Lichtwellen (106) wenigstens 70 Hertz beträgt, wobei die Lichtwellen (106) mit einer sichtbaren Wellenlänge übertragen werden, wobei das Verfahren die folgenden Schritte umfasst:
- Erzeugen einer ersten binären Kodesequenz (A) aus den digitalen Daten (104) in einem Kodierer (102) mittels eines Non-Return-to-Zero-Kodierverfahrens;
- Wandeln der ersten binären Kodesequenz (A) in eine zweite binäre Kodesequenz (B) in einem Kodesequenzwandler (102) mittels eines Kodewandlungsverfahrens derart, dass eine durch die zweite binäre Kodesequenz (B) bestimmte Modulationsfrequenz der Lichtwellen wenigstens 70 Hertz beträgt, wobei in dem Kodewandlungsverfahren erste Binärdatenblöcke wählbarer Blocklänge durch wählbare zweite Binärdatenblöcke, welche den ersten Binärdatenblöcken eineindeutig zugeordnet sind, ersetzt werden;
- Modulieren der Intensität der Lichtwellen (106) mit der zweiten Kodesequenz (B) in einer modulierbaren Lichtquelle (103) des Senders (101);
- Empfangen und Demodulieren der Lichtwellen (106) im Empfänger (107) zum Rückgewinnen der zweiten Kodesequenz (B);
- Rückwandeln der zweiten Kodesequenz (B) in die erste Kodesequenz (A) in einem Kodesequenzrückwandler (109) mittels des inversen Kodewandlungsverfahrens, bei dem die zweiten Binärdatenblöcke durch die erste Binärdatenblöcke ersetzt werden;
- Erzeugen der digitalen Daten (104) aus der ersten binären Kodesequenz (A) mittels des inversen Kodierverfahrens.

2. Verfahren nach Anspruch 1, **dadurch gekennzeichnet, dass** die binäre Kodesequenz (105) so erzeugt wird, dass eine durch die binäre Kodesequenz bestimmte Modulationsfrequenz der Lichtwellen (106) wenigstens 100 Hertz beträgt.

3. Verfahren nach Anspruch 1, **dadurch gekennzeichnet, dass** die binäre zweite Kodesequenz (B) so gewandelt wird, dass eine durch die binäre zweite Kodesequenz bestimmte Modulationsfrequenz der Lichtwellen wenigstens 100 Hertz beträgt.

4. Verfahren nach einem der Ansprüche 1 bis 3,
**dadurch gekennzeichnet, dass** die zweite binäre Kodesequenz (B) mittels einer 4B/5B-Kodewandlung erzeugt wird.

5. Verfahren nach einem der Ansprüche 1 bis 3,
**dadurch gekennzeichnet, dass** die zweite binäre Kodesequenz (B) mittels einer 8B/10B-Kodewandlung erzeugt wird.

6. Vorrichtung (100) zur Übertragung digitaler Daten (104) in einem optischen Freiraum-Übertragungssystem (100), **dadurch gekennzeichnet, dass** die Vorrichtung (100) Mittel (102, 103, 107, 108) umfasst, die derart ausgebildet sind, dass ein Verfahren nach einem der vorangehenden Ansprüche durchführbar ist.

## Claims

1. Method for transmitting digital data (104) in a free-space optical transmission system (100), wherein amplitude-modulated light waves (106) are transmitted over a free-space optical link between a transmitter (101) and a receiver (107) using a binary code sequence (105) generated from the digital data (104), wherein the binary code sequence (105) is generated such that a modulation frequency of the light waves (106) which is determined by the binary code sequence is at least 70 hertz, wherein the light waves (106) are transmitted with a visible wavelength, wherein the method comprises the following steps:
- generating a first binary code sequence (A) from the digital data (104) in an encoder (102) by means of a non-return-to-zero encoding technique;
- converting the first binary code sequence (A) into a second binary code sequence (B) in a code sequence converter (102) by means of a code conversion scheme such that a light wave modulation frequency determined by the second binary code sequence (B) is at least 70 hertz, wherein, in the code conversion scheme, first binary data blocks of selectable block length are replaced by selectable second binary data blocks assigned to the first binary data blocks on a one-to-one basis;
- modulating the intensity of the light waves (106) with the second code sequence (B) in a modulatable light source (103) of the transmitter (101);
- receiving and demodulating the light waves (106) in the receiver (107) to recover the second code sequence (B);
- converting the second code sequence (B) back into the first code sequence (A) in a code sequence back-converter (109) by means of the inverse code conversion scheme, in which the second binary data blocks are replaced by the first binary data blocks;
- generating the digital data (104) from the first binary code sequence (A) using the inverse encoding technique.

2. Method according to claim 1, **characterised in that** the binary code sequence (105) is generated such that a modulation frequency of the light waves (106) which is determined by the binary code sequence is at least 100 hertz.

3. Method according to claim 1, **characterised in that** the binary second code sequence (B) is selected such that a light wave modulation frequency determined by the binary second code sequence is at least 100 hertz.

4. Method according to one of claims 1 to 3,
**characterised in that** the second binary code sequence (B) is generated by 4B/5B code conversion.

5. Method according to one of claims 1 to 3,
**characterised in that** the second binary code sequence (B) is generated by 8B/10B code conversion.

6. Device (100) for transmitting digital data (104) in a free-space optical transmission system (100), **characterised in that** the device (100) comprises means (102, 103, 107, 108) which are implemented such that a method according to one of the preceding claims can be carried out.

## Revendications

1. Procédé de transmission de données numériques (104) dans un système de transmission optique en espace libre (100), dans lequel des ondes lumineuses à modulation d'amplitude (106) sont transmises avec une séquence de code binaire (105) produite à partir des données numériques (104) entre un émetteur (101) et un récepteur (107) par l'intermédiaire d'un parcours optique en espace libre, dans lequel la séquence de code binaire (105) est produite de telle manière qu'une fréquence de modulation, déterminée grâce à la séquence de code binaire, des ondes lumineuses (106) est d'au moins 70 Hertz, dans lequel les ondes lumineuses (106) sont transmises avec une longueur d'onde visible, dans lequel le procédé comprend les étapes suivantes :
- produire une première séquence de code binaire (A) à partir des données numériques (104) dans un dispositif de codage (102) au moyen d'un procédé de codage sans retour à zéro ;
- convertir la première séquence de code binaire (A) en une deuxième séquence de code binaire (B) dans un convertisseur de séquence de code (102) au moyen d'un procédé de conversion de code de telle manière qu'une fréquence de modulation, déterminée grâce à la deuxième séquence de code binaire (B), des ondes lumineuses est d'au moyen 70 Hertz, dans lequel des premiers blocs de données binaires présentant des longueurs de bloc sélectionnables sont remplacés, au sein du procédé de conversion de code, par des deuxièmes blocs de données binaires sélectionnables qui sont associés de manière univoque aux premiers blocs de données binaires ;
- moduler l'intensité des ondes lumineuses (106) au sein d'une source lumineuse modulable (103) de l'émetteur (101) grâce à la deuxième séquence de code (B) ;
- recevoir et démoduler les ondes lumineuses (106) dans le récepteur (107) afin de récupérer la deuxième séquence de code (B) ;
- reconvertir la deuxième séquence de code (B) en la première séquence de code (A) dans un reconvertisseur de séquence de code (109) au moyen du procédé inverse de conversion de code, grâce auquel les deuxièmes blocs de données binaires sont remplacés par les premiers blocs de données binaires ;
- produire les données numériques (104) à partir de la première séquence de code binaire (A) au moyen du procédé de codage inverse.

2. Procédé selon la revendication 1, **caractérisé en ce que** la séquence de code binaire (105) est produite de telle manière qu'une fréquence de modulation, déterminée grâce à la séquence de code binaire, des ondes lumineuses (106) est d'au moins 100 Hertz.

3. Procédé selon la revendication 1, **caractérisé en ce que** la deuxième séquence de code binaire (B) est convertie de telle manière qu'une fréquence de modulation, déterminée grâce à la deuxième séquence de code binaire, des ondes lumineuses est d'au moins 100 Hertz.

4. Procédé selon l'une quelconque des revendications 1 à 3, **caractérisé en ce que** la deuxième séquence de code binaire (B) est produite au moyen d'une conversion de code 4B/5B.

5. Procédé selon l'une quelconque des revendications 1 à 3, **caractérisé en ce que** la deuxième séquence de code binaire (B) est produite au moyen d'une conversion de code 8B/10B.

6. Dispositif (100) de transmission de données numériques (104) dans un système de transmission optique en espace libre (100), **caractérisé en ce que** le dispositif (100) comprend un moyen (102, 103, 107, 108) qui est réalisé de telle manière qu'un procédé selon l'une quelconque des revendications précédentes peut être mis en oeuvre.
